# EUROPEAN PATENT SPECIFICATION

(11) **EP 2 098 704 B1**
(45) Date of publication and mention of the grant of the patent: **04.05.2016**
(21) Application number: 09250625.2
(22) Date of filing: 04.03.2009
(51) Int. Cl.: F02C 9/16, F02K 1/16, F02K 3/06, F04D 29/66

(54) **Fan flutter management system in a turbofan engine with variable area fan nozzle**
Managementsystem des Fanflatterns in einem Turbofan mit variablem Fandüsenquerschnitt
Système de gestion de flottement de soufflante dans un turboréacteur double flux avec tuyère de soufflante à géométrie variable

(30) Priority: 05.03.2008 US 42361
(43) Date of publication of application: 09.09.2009
(73) Proprietor: United Technologies Corporation, Hartford, CT 06101 (US)
(72) Inventor: Grabowski, Zbigniew M., Farmington, CT 06032 (US); Morris, Robert J., Portland, CT 06480 (US)
(74) Representative: Leckey, David Herbert

(56) References cited:
- EP-A2- 1 420 153
- US-A- 5 857 321
- US-A1- 2003 077 163
- US-A1- 2006 195 248

## Description

### BACKGROUND OF THE INVENTION

The present invention relates to a control system, and more particularly to a turbofan engine having a fan variable area nozzle structure which minimizes fan stability/flutter issues through a neural network.

Conventional gas turbine engines include a fan section driven by a core engine. Combustion gases are discharged from the core engine along a primary airflow path and are exhausted through a core exhaust nozzle. Pressurized fan air is discharged through an annular fan nozzle defined at least partially by a fan nacelle and a core nacelle. A majority of propulsion thrust is provided by the pressurized fan air discharged through the fan nozzle, the remainder of the thrust provided from the combustion gases discharged through the core exhaust nozzle.

Fan nozzles of conventional gas turbine engines have fixed geometry. Fixed geometry fan nozzles are a compromise suitable for take-off and landing conditions as well as for cruise conditions as the requirements for take-off and landing conditions are different from requirements for a cruise condition. Some gas turbine engines have implemented fan variable area nozzles. The fan variable area nozzle provides a smaller fan exit nozzle diameter during cruise conditions and a larger fan exit nozzle diameter during take-off and landing conditions to optimize operation at each condition.

Although low pressure ratio turbofans provide high propulsive efficiency, low pressure ratio turbofans may be susceptible to fan stability/flutter at low power and low flight speeds. Fan blade flutter signature and flutter boundary management characteristics may change over the life of the engine thereby complicating compensation of the fan stability/flutter issue.

US 2003/0077163 A1 describes a method and system of flutter control for rotary compression systems. EP 1420153 A2 describes adapture model-based control systems for controlling a gas turbine. US 2006/0195248 A1 describes a fault detection system and method for turbine engine fuel systems. US 5,857,321 describes a controller with neural network for estimating gas turbine internal cycle parameters.

### SUMMARY OF THE INVENTION

A gas turbine engine according to an exemplary aspect of the present invention includes: a core engine defined about an axis; a fan driven by the core engine about the axis; a core nacelle defined at least partially about the core engine; a fan nacelle around the fan and at least partially around the core nacelle, the fan nacelle having a variable area fan nozzle (VAFN) which defines a fan exit area downstream of the fan between the fan nacelle and the core nacelle; and a controller trimmed in response to a neural network to control a fan blade flutter characteristic through control of the variable area fan nozzle.

A method of controlling a gas turbine engine according to an exemplary aspect of the present invention includes adjusting a variable area fan nozzle in response to a neural network to minimize a fan blade flutter characteristic.

### BRIEF DESCRIPTION OF THE DRAWINGS

The various features and advantages of this invention will become apparent to those skilled in the art from the following detailed description of the currently disclosed embodiment. The drawings that accompany the detailed description can be briefly described as follows:
Figure 1 is a general schematic partial fragmentary view of an exemplary gas turbine engine embodiment for use with the present invention;
Figure 2 is a general schematic view of a control system with neural network support for a gas turbine engine;
Figure 3 is a block diagram illustrating training of a neural network and trimming of a FADEC;
Figure 4 is a general schematic view of a FADEC; and
Figure 5 is a graphical representation of a flutter boundary relative to a VAFN opening schedule.

### DETAILED DESCRIPTION OF THE DISCLOSED EMBODIMENT

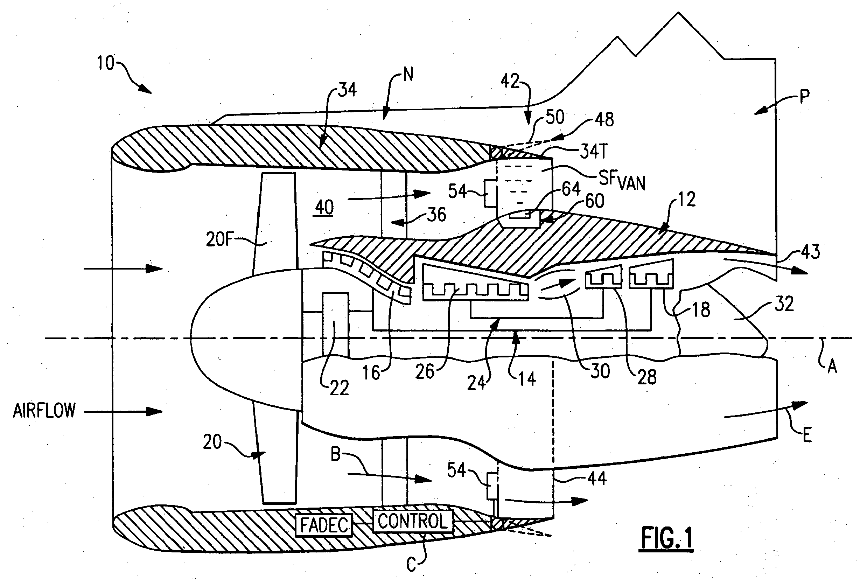

Figure 1 illustrates a general partial fragmentary schematic view of a gas turbine engine 10 suspended from an engine pylon P within an engine nacelle assembly N as is typical of an aircraft designed for subsonic operation.

The engine 10 includes a core engine within a core nacelle 12 that at least partially houses a low pressure spool 14 and high pressure spool 24. The low pressure spool 14 includes a low pressure compressor 16 and low pressure turbine 18. The low pressure spool 14 drives a fan section 20 directly or through a gear system 22. The high pressure spool 24 includes a high pressure compressor 26 and high pressure turbine 28. A combustor 30 is arranged between the high pressure compressor 26 and high pressure turbine 28. The low pressure and high pressure spools 14, 24 rotate about an engine axis of rotation A.

The engine 10 in one non-limiting embodiment is a high-bypass geared architecture aircraft engine with a bypass ratio greater than ten (10:1), a turbofan diameter significantly larger than that of the low pressure compressor 16, and a low pressure turbine pressure ratio greater than 5:1. The gear system 22 may be an epicycle gear train such as a planetary gear system or other gear system with a gear reduction ratio of greater than 2.5:1. It should be understood, however, that the above parameters are only exemplary of one non-limiting embodiment of a geared architecture engine and that the present invention is applicable to other gas turbine engines including direct drive turbofans.

Airflow enters a fan nacelle 34, which at least partially surrounds the core nacelle 12. The fan section 20 communicates airflow into the core nacelle 12 to power the low pressure compressor 16 and the high pressure compressor 26. Core airflow compressed by the low pressure compressor 16 and the high pressure compressor 26 is mixed with the fuel in the combustor 30 and expanded over the high pressure turbine 28 and low pressure turbine 18. The turbines 28, 18 are coupled for rotation through spools 24, 14 to rotationally drive the compressors 26, 16 and the fan section 20 in response to the expansion. A core engine exhaust E exits the core nacelle 12 through a core nozzle 43 defined between the core nacelle 12 and a tail cone 32.

The core nacelle 12 is at least partially supported within the fan nacelle 34 by structure 36 often generically referred to as Fan Exit Guide Vanes (FEGVs). A bypass flow path 40 is defined between the core nacelle 12 and the fan nacelle 34. The engine 10 generates a high bypass flow arrangement with a bypass ratio in which approximately 80 percent of the airflow entering the fan nacelle 34 becomes bypass flow B. The bypass flow B is communicated through the generally annular bypass flow path 40 and is discharged from the engine 10 through a variable area fan nozzle (VAFN) 42 which defines a nozzle exit area 44 between the fan nacelle 34 and the core nacelle 12 adjacent to an end segment 34S of the fan nacelle 34 downstream of the fan section 20.

A significant amount of thrust is provided by the bypass flow B due to the high bypass ratio. The fan section 20 of the engine 10 may, in one non-limiting embodiment, be designed for a particular flight condition -- typically cruise at 0.8M and 35,000 feet (10668 m). The VAFN 42 defines a nominal converged cruise position for the fan nozzle exit area 44 and radially opens relative thereto to define a diverged position for other flight conditions. The VAFN 42, in one non-limiting embodiment, provides an approximately 20% (twenty percent) change in the fan exit nozzle area 44. It should be understood that other arrangements as well as essentially infinite intermediate positions as well as thrust vectored positions in which some circumferential sectors of the VAFN 42 are converged or diverged relative to other circumferential sectors are likewise usable with the present invention.

As the fan blades 20F within the fan section 20 are efficiently designed at a particular fixed stagger angle for an efficient cruise condition, the VAFN 42 is operated to effectively vary the fan nozzle exit area 44 to adjust fan bypass flow such that the angle of attack or incidence on the fan blades 20F is maintained close to the design incidence for efficient engine operation at other flight conditions, such as landing and takeoff to thus provide optimized engine operation over a range of flight conditions with respect to performance and other operational parameters such as noise levels.

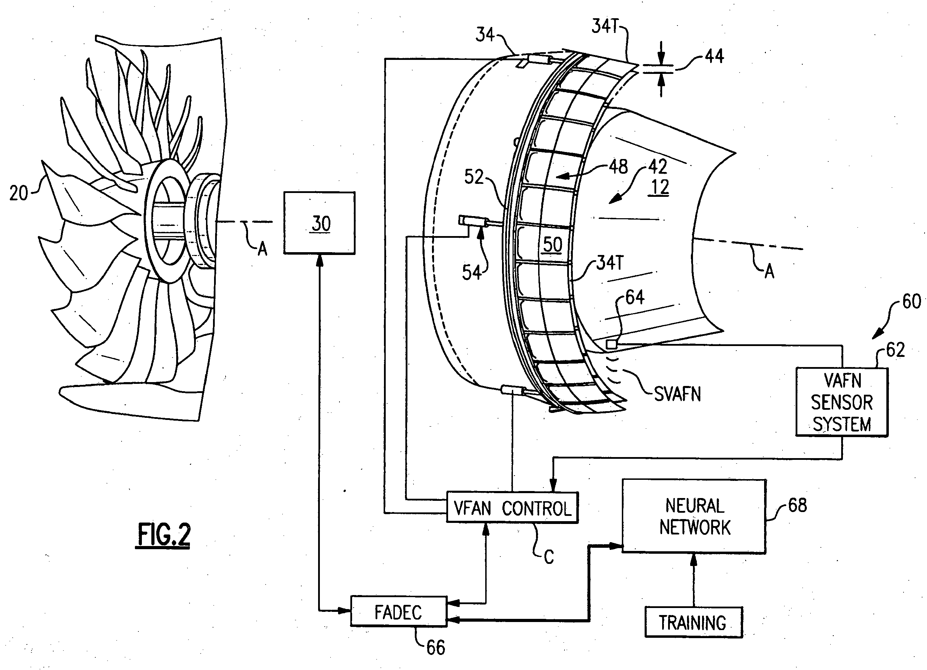

The VAFN 42 generally includes a flap assembly 48 which varies the fan nozzle exit area 44. The flap assembly 48 may be incorporated into the end segment 34T of fan nacelle 34 to includes a trailing edge 34T thereof The flap assembly 48 generally includes a multiple of VAFN flaps 50, a respective multiple of flap linkages 52 and an actuator system 54 (also illustrated in Figure 2). It should be understood that although VAFN flaps 50 are illustrated in the disclosed embodiment, other VAFN 42 systems which vary the fan nozzle exit area 44 are likewise usable with the present invention.

Thrust is a function of density, velocity, and area. One or more of these parameters can be manipulated to vary the amount and direction of thrust provided by the bypass flow B. The VAFN 42 operates to effectively vary the area of the fan nozzle exit area 44 to selectively adjust the pressure ratio of the bypass flow B in response to a VAFN controller C. The VAFN controller C may include a processing module, such as a microprocessor and a memory device in communication therewith to operate the actuator system 54.

Low pressure ratio turbofans are desirable for their high propulsive efficiency. However, low pressure ratio fans may be inherently susceptible to fan stability/flutter issues at low power and low flight speeds. The VAFN 42 allows the engine 10 to shift to a more favorable fan operating line at low power to avoid the instability region, yet provide a relatively smaller nozzle area necessary to shift to a high-efficiency fan operating line at a cruise condition.

Referring to Figure 2, the position of the VAFN 42 is determined by a positional measurement system 60. The positional measurement system 60 remotely senses the position of the VAFN flaps 50 through, in one non-limiting embodiment, a VAFN sensor system 62. The VAFN sensor system 62 remotely measures the position of the VAFN flaps 50 through a signal Svafn which reflects off of the VAFN flap 50 to measure their actual position relative the core nacelle 12. The VAFN sensor system 62 in one non-limiting embodiment, includes a transceiver 64 located within the core nacelle 12 to a direct the signal Svafn in a radial direction toward the VAFN flaps 50. The signals Svafn, may include various signals or combinations of signals including microwave, radio, optical, laser, or the like. It should be understood that the positional measurement system 60 may alternatively or additionally include other systems to determine the position of the VAFN 42.

The VAFN controller C communicates with an engine controller such as a Full Authority Digital Engine Control (FADEC) 66 which also controls fuel flow to the combustor 30. It should be understood that the FADEC 66 may communicate with a higher level controller such as flight control computer, or such like. The VAFN controller C determines and controls the position of the VAFN 42 in response to the FADEC 66. The FADEC is trimmed by the Neural Network (NN) 68 which has been trained so as to compensate for a fan blade flutter characteristic. That is, FADEC trim is adjusted by the neural network NN.

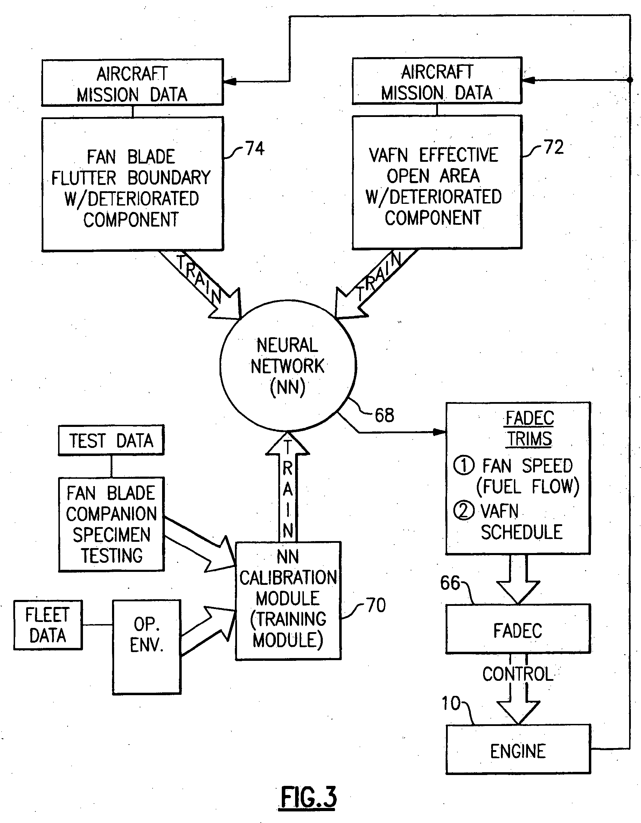

Referring to Figure 3, the training of the neural network NN may be, in one non-limiting embodiment, generated by aircraft mission data, fan blade companion testing, VAFN fleet data, as well as other inputs. A calibration module 70 is utilized to train the neural network 68 with a baseline expected deterioration profile validated and updated by serial number specific in-flight aircraft mission data from each specific engine. That is, the neural network NN is trained to the specifics of each engine through the combination of serial number specific data for that engine, test data, of fleet data, as well as other data.

The neural network 68 training input utilizes test data to determine a baseline expected deterioration profile. Such test data may be determined through companion specimen tests and fleet data which is communicated to the calibration module 70 for incorporation into the neural network 68.

Companion specimen tests may include testing of fan blades and/or other engine components to determine the baseline expected deterioration profile. The fleet data may further modify the baseline expected deterioration profile due to, for example only, the expected fleet operating environment of which the particular engine is part. That is, engines from a fleet expected to operate primarily in a relatively cold environment may have one type of baseline modification while engines which are expected to operate primarily in a relatively hot environment may have a different type of baseline modification specific thereto.

Aircraft mission data is serial number specific in-flight operational data obtained from each engine for incorporation into the neural network NN. Serial number specific data may be incorporated into the neural network NN to tailor the FADEC to each specific engine. The aircraft mission data may include, in one non-limiting embodiment, VAFN effective open area with a deterioration component 72 and fan blade flutter boundary with a deterioration component 74 to describe component operational differences between each engine. That is, each engine may deteriorate or change differently over time such that neural network NN is trained for operation of the particular engine.

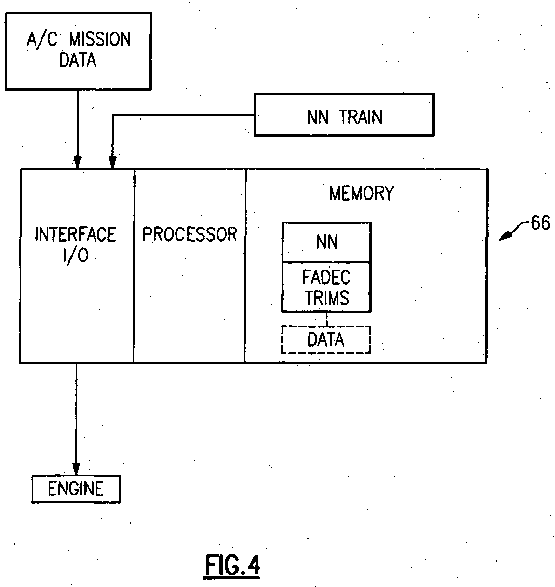

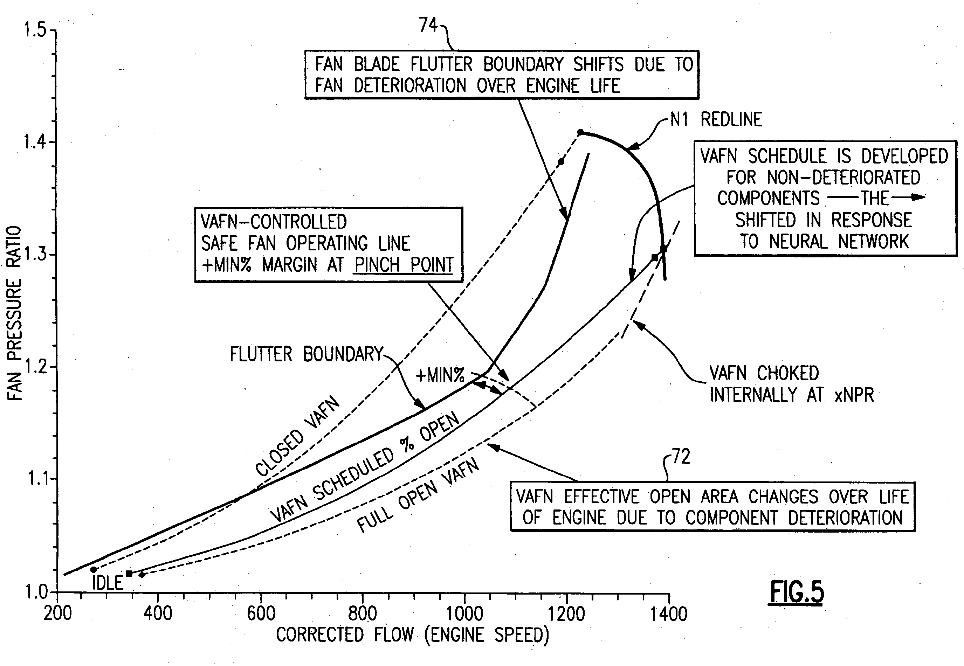

The FADEC 66, in one non-limiting embodiment, includes a processing module, a memory device and an interface for communication with engine systems and other components (Figure 4). The processing module may include a microprocessor and the memory device may include RAM, ROM, electronic, optical, magnetic, or other computer readable medium onto which is stored, for example only, the FADEC trims, the neural network NN as well as other data such as that graphically illustrated in Figure 5. It should be understood that the neural network NN may be stored within the FADEC 66 or may be a separate module.

Once trained, the neural network NN determines the FADEC trims to compensate for component deterioration and other operations then updates the FADEC. The FADEC schedules the percent open of the VAFN 42 (VAFN schedule; Figure 5) and/or adjusts the speed of the blades 20F through fuel flow control to the combustor 30 (Figure 2). The FADEC thereby provides fan flutter/instability boundary management in response to the neural network NN to compensate for component deterioration. The neural network NN may also be retrained at period intervals with updated aircraft mission data and updated test data.

Referring to Figure 5, a graphical representation of the fan blade flutter boundary relative to the VAFN schedule is illustrated in graphical form. Over time, the fan blade flutter boundary and full open VAFN boundary will shift in response to component deterioration. The VAFN schedule is initially determined for a baseline operation of the VAFN 42. As the fan blade flutter boundary and full open VAFN boundary shifts due to deterioration or other operating conditions, the neural network NN will determine appropriate FADEC trims, update the FADEC and shift the VAFN schedule to maintain efficient engine operation yet avoid fan flutter/instability.

It should be understood that relative positional terms such as "forward," "aft," "upper," "lower," "above," "below," and the like are with reference to the normal operational attitude of the vehicle and should not be considered otherwise limiting.

It should be understood that although a particular component arrangement is disclosed in the illustrated embodiment, other arrangements will benefit from the instant invention.

Although particular step sequences are shown, described, and claimed, it should be understood that steps may be performed in any order, separated or combined unless otherwise indicated and will still benefit from the present invention.

The foregoing description is exemplary rather than defined by the limitations within. Many modifications and variations of the present invention are possible in light of the above teachings. The disclosed embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A gas turbine engine (10) comprising:
a core engine defined about an axis (A);
a fan (20) driven by said core engine about said axis (A);
a core nacelle (12) defined at least partially about said core engine;
a fan nacelle (34) defined around said fan and at least partially around said core nacelle, and
a variable area fan nozzle (VAFN) (42) to define a fan exit area (44) downstream of said fan (20) between said fan nacelle (34) and said core nacelle (12); and **characterized by**
a controller (66) trimmed in response to a neural network to control a fan blade flutter characteristic through control of said VAFN (42).

2. The engine as recited in claim 1, wherein said neural network (68) is a trainable neural network.

3. The engine as recited in claim 2, wherein said controller (66) is a FADEC (66).

4. The engine as recited in claim 3, wherein said FADEC (66) is in communication with a VAFN controller (C) which controls said VAFN (42).

5. The engine as recited in claim 3, wherein said FADEC (66) is operable to control a fan speed of said fan (20) through control of fuel to a combustor (30).

6. The engine as recited in claim 5, wherein said fan (20) is driven by said core engine through a gear system (22).

7. A method of controlling a gas turbine engine (10) **characterized by** comprising the step of:
adjusting a variable area fan nozzle (42) in response to a neural network (68) to control a fan blade flutter characteristic.

8. A method as recited in claim 7, further comprising:
training the neural network (68) in response to a prior flight event.

9. A method as recited in claim 7 or 8, further comprising:
training the neural network (68) during a flight event.

10. A method as recited in claim 7, 8 or 9, further comprising:
training the neural network (68) through fan blade companion testing.

11. A method as recited in any of claims 7 to 10, further comprising:
training the neural network (68) through aircraft mission data.

12. A method as recited in any of claims 7 to 11, further comprising:
training the neural network (68) in response to fleet data.

13. A method as recited in any of claims 7 to 12, further comprising:
adjusting a fan speed in response to the neural network (68).

## Patentansprüche

1. Gasturbinentriebwerk (10), umfassend:
ein Kerntriebwerk, das um eine Achse (A) definiert ist;
einen Bläser (20), der von dem Kerntriebwerk um die Achse (A) angetrieben wird;
eine Kerngondel (12), die wenigstens teilweise um das Kerntriebwerk definiert ist;
eine Bläsergondel (34), die um den Bläser und wenigstens teilweise um die Kerngondel definiert ist, und
eine Bläserdüse mit variablem Querschnitt (VAFN) (42) zum Definieren eines Bläseraustrittsquerschnitts (44) stromabwärts von dem Bläser (20) zwischen der Bläsergondel (34) und der Kerngondel (12); und **gekennzeichnet durch**
eine Steuereinrichtung (66), die in Reaktion auf ein neuronales Netz angepasst ist, eine Bläserschaufelflattercharakteristik **durch** Steuerung der VAFN(42) zu steuern.

2. Triebwerk nach Anspruch 1, wobei das neuronale Netz (68) ein lernfähiges neuronales Netz ist.

3. Triebwerk nach Anspruch 2, wobei die Steuereinrichtung (66) eine FADEC (66) ist.

4. Triebwerk nach Anspruch 3, wobei die FADEC (66) in Kommunikation mit einer VAFN-Steuereinrichtung (C) steht, die die VAFN (42) steuert.

5. Triebwerk nach Anspruch 3, wobei die FADEC (66) betriebsfähig ist, um eine Bläserdrehzahl des Bläsers (20) durch Steuern von Brennstoff an eine Brennkammer (30) zu steuern.

6. Triebwerk nach Anspruch 5, wobei der Bläser (20) von dem Kerntriebwerk durch ein Getriebesystem (22) angetrieben wird.

7. Verfahren zum Steuern eines Gasturbinentriebwerks (10), **dadurch gekennzeichnet, dass** es folgenden Schritt umfasst:
Einstellen einer Bläserdüse mit variablem Querschnitt (42) in Reaktion auf ein neuronales Netz (68), um eine Bläserschaufelflattercharakteristik zu steuern.

8. Verfahren nach Anspruch 7, ferner umfassend:
Einlernen des neuronalen Netzes (68) in Reaktion auf ein vorhergehendes Flugereignis.

9. Verfahren nach Anspruch 7 oder 8, ferner umfassend:
Einlernen des neuronalen Netzes (68) während eines Flugereignisses.

10. Verfahren nach Anspruch 7, 8 oder 9, ferner umfassend:
Einlernen des neuronalen Netzes (68) durch Bläserschaufelbegleittests.

11. Verfahren nach einem der Ansprüche 7 bis 10, ferner umfassend:
Einlernen des neuronalen Netzes (68) durch Flugzeugmissionsdaten.

12. Verfahren nach einem der Ansprüche 7 bis 11, ferner umfassend:
Einlernen des neuronalen Netzes (68) in Reaktion auf Flottendaten.

13. Verfahren nach einem der Ansprüche 7 bis 12, ferner umfassend:
Einstellen einer Bläserdrehzahl in Reaktion auf das neuronale Netz (68).

## Revendications

1. Moteur à turbine à gaz (10), comprenant :
un bloc moteur défini autour d'un axe (A) ;
un ventilateur (20) entraîné par ledit bloc moteur autour dudit axe (A) ;
une nacelle de bloc (12) définie au moins partiellement autour dudit bloc moteur ;
une nacelle de ventilateur (34) définie autour dudit ventilateur et au moins partiellement autour de ladite nacelle de bloc, et
une buse de ventilateur à section variable (VAFN) (42) pour définir une section de sortie de ventilateur (44) en aval dudit ventilateur (20) entre ladite nacelle de ventilateur (34) et ladite nacelle de bloc (12) ; et **caractérisé par**
un dispositif de commande (66) ajusté en réponse à un réseau neuronal pour commander une caractéristique de flottement d'aube de ventilateur par commande de ladite VAFN (42).

2. Moteur selon la revendication 1, dans lequel ledit réseau neuronal (68) est un réseau neuronal apte à l'apprentissage.

3. Moteur selon la revendication 2, dans lequel ledit dispositif de commande (66) est un FADEC (66).

4. Moteur selon la revendication 3, dans lequel ledit FADEC (66) est en communication avec un dispositif de commande de VAFN (C) qui commande ladite VAFN (42).

5. Moteur selon la revendication 3, dans lequel ledit FADEC (66) est utilisable pour commander une vitesse de ventilateur dudit ventilateur (20) par commande du carburant à une chambre de combustion (30).

6. Moteur selon la revendication 5, dans lequel ledit ventilateur (20) est entraîné par ledit bloc moteur par l'intermédiaire d'un système d'engrenage (22).

7. Procédé de commande d'un moteur à turbine à gaz (10) **caractérisé en ce qu'**il comprend l'étape suivants :
le réglage d'une buse de ventilateur à section variable (42) en réponse à un réseau neuronal (68) pour commander une caractéristique de flottement d'aube de ventilateur.

8. Procédé selon la revendication 7, comprenant en outre :
l'apprentissage du réseau neuronal (68) en réponse à un événement de vol précédent.

9. Procédé selon la revendication 7 ou 8, comprenant en outre :
l'apprentissage du réseau neuronal (68) durant un événement de vol.

10. Procédé selon la revendication 7, 8 ou 9, comprenant en outre :
l'apprentissage du réseau neuronal (68) par essais concomitants d'aube de ventilateur.

11. Procédé selon l'une quelconque des revendications 7 à 10, comprenant en outre :
l'apprentissage du réseau neuronal (68) par données de mission d'aéronef.

12. Procédé selon l'une quelconque des revendications 7 à 11, comprenant en outre :
l'apprentissage du réseau neuronal (68) en réponse à des données de flotte.

13. Procédé selon l'une quelconque des revendications 7 à 12, comprenant en outre :
le réglage d'une vitesse de ventilateur en réponse au réseau neuronal (68).
